# EUROPÄISCHE PATENTANMELDUNG

(11) **EP 1 047 034 A2**
(43) Veröffentlichungstag der Anmeldung: **25.10.2000**
(21) Anmeldenummer: 00103940.3
(22) Anmeldetag: 25.02.2000
(51) Int. Cl.: G08C 17/02, G08C 23/04

(54) **Fernbedienungsvorrichtung**

(30) Priorität: 26.02.1999 DE 19908406
(71) Anmelder: PLATZ, Karl-Otto, 51657 Wiehl (DE)
(72) Erfinder: PLATZ, Karl-Otto, 51657 Wiehl (DE)
(74) Vertreter: Dallmeyer, Georg, Dipl.-Ing.

(57) **Zusammenfassung**

Bei einer Fernbedienungsvorrichtung für mindestens eine elektrische Schalteinrichtung oder mindestens ein elektrisches Gerät mit einem Gehäuse (2), mit einem Bedienfeld (4) für unterschiedliche Fernbedienungsbefehle, mit mindestens einer Sendeeinrichtung (8) in dem Gehäuse (2) und mindestens einer Empfangseinrichtung in jeder Schalteinrichtung oder in jedem Gerät zur drahtlosen Übertragung der Fernbedienungsbefehle, sowie mit einem Batteriefach (16) für die Stromversorgung, ist vorgesehen, daß das Bedienfeld aus einem frei programmierbaren Glasbedienfeld (4) besteht, das bei Druckbelastung ein Schaltsignal an die Sendeeinrichtung (8) überträgt.

## Beschreibung

Die Erfindung betrifft eine Fernbedienungsvorrichtung für mindestens eine elektrische Schalteinrichtung oder mindestens ein elektrisches Gerät nach dem Oberbegriff des Anspruchs 1.

Derartige Fernbedienungsvorrichtungen sind als Fernsteuerung für Audio- oder Videoanlagen bekannt.

Desweiteren ist es beispielsweise aus der DE-U 94 09 880 bekannt, Beleuchtungseinrichtungen mit Hilfe einer drahtlosen Fernsteuerung zu schalten. Hierbei können einzelne Leuchten individuell angesteuert werden, indem ein entsprechend kodiertes Steuersignal per Funk oder Infrarot übertragen wird. Vorteilhaft ist, daß herkömmliche Lichtschalter im Bereich von Eingangstüren und auf die entsprechende Verkabelung in der Wand verzichtet werden kann.

Nachteilig ist, daß die herkömmlichen Fernbedienungen auf ein bestimmtes Gerätesystem zugeschnitten sind und nicht universell einsetzbar sind.

Es existieren zwar für Audio- und Videoanlagen Fernbedienungen, die für Geräte unterschiedlicher Hersteller programmierbar sind, allerdings sind diese für weitere Funktionen, z.B. das Steuern von Lichtanlagen nicht verwendbar.

Der Erfindung liegt die Aufgabe zugrunde, eine Fernbedienungsvorrichtung der eingangs genannten Art zu schaffen, die universell verwendbar ist und die auch interaktiv einsetzbar ist.

Zur Lösung dieser Aufgabe dienen die Merkmale des Anspruchs 1.

Die Erfindung sieht in vorteilhafter Weise vor, daß das Bedienfeld aus einem frei programmierbaren Glasbedienfeld besteht, das bei Druckbelastung ein Schaltsignal an die Sendeeinrichtung überträgt. Das frei programmierbare Glasbedienfeld hat den Vorteil, daß für unterschiedliche Funktionen unterschiedliche Funktionsfelder mit Tastaturflächen unterschiedlicher Größe und Kennzeichnung definiert werden können. Auf diese Weise ist die Fernbedienung an sehr unterschiedliche Aufgaben anpaßbar. Darüber hinaus ist das Glasbedienfeld in hohem Maße aufgrund der Glasoberfläche verschleißfest. Desweiteren ist die Zuverlässigkeit erhöht, weil kein Schmutz in die Tastatur eindringen kann.

Das Glasbedienfeld besteht aus einer flexiblen Dünnglasscheibe und mindestens einer Trägermaterialscheibe, deren einander zugewandte Flächen jeweils eine elektrisch leitende Schicht aufweisen. Die sich gegenüberstehenden Scheiben sind mit Hilfe von Abstandhaltern auf Abstand gehalten, wobei sich die elektrisch leitenden Schichten bei Druckbelastung der flexiblen Dünnglasscheibe an eine im wesentlichen punktuellen Druckbelastungsstelle berühren und das Schaltsignal auslösen. Ein derartiges Glasbedienfeld kann je nach Gestaltung der elektrisch leitenden Schichten ein analoges oder ein digitales Schaltsignal erzeugen.

Bei einem Ausführungsbeispiel ist vorgesehen, daß das Gehäuse auf der der Dünnglasscheibe abgewandten Seite der Trägermaterialscheibe ein Aufnahmeschlitz für eine auswechselbare Tafel zur Kennzeichnung der Funktionsfelder auf dem Glasbedienfeld aufweist. Bei einer Änderung der Programmierung der Fernbedienungsvorrichtung kann durch Auswechseln der Tafel auch eine entsprechende Kennzeichnung der Funktionsfelder erfolgen. Beispielsweise ist es möglich, die Rückseite der Tafel zur Kennzeichnung einer anderen Fernbedienungsfunktion zu verwenden.

Alternativ kann vorgesehen sein, daß auf der der Dünnglasscheibe abgewandten Seite der Trägermaterialscheibe ein LCD-Anzeigedisplay zur Kennzeichnung von Funktionsfeldern auf dem Bedienfeld oder zur Anzeige von Informationen angeordnet sein. Ein derartiges LCD-Anzeigedisplay ermöglicht nicht nur die Kennzeichnung der Funktionsfelder, sondern darüber hinaus auch die Anzeige von Schrift- und Bildinformationen, z.B. ein Videobild.

Die Trägermaterialscheibe kann auf der der Dünnglasscheibe abgewandten Seite eine lichtstreuende, aufgerauhte Oberfläche aufweisen. Die aufgerauhte Oberfläche ist in der Lage, das Licht zu streuen und ermöglicht eine Beleuchtung der Fernbedienungsvorrichtung.

Alternativ kann die Trägermaterialscheibe auf der der Dünnglasscheibe abgewandten Seite eine Lichtleitfolie mit einer Prismenoberfläche aufweisen. Auch diese Lichtleitfolie ermöglicht eine effektive Beleuchtung der Fernbedienungsvorrichtung.

Die Dünnglasscheibe kann auf der Unterseite einen Dekorrand aufweisen. Die flexible Dünnglasscheibe kann entweder aus einer gezogenen oder einer gefloateten Dünnglasfolie bestehen.

Die Trägermaterialscheibe kann beidseitig eine elektrisch leitende Schicht aufweisen. Auf diese Weise können auch auf der Unterseite der Trägerscheibe elektrische Signale übertragen werden.

Beispielsweise ist vorgesehen, daß das LCD-Anzeigedisplay in direktem Kontakt mit der Trägerscheibe kabellos angeschlossen ist. Dabei kontaktiert das LCD-Anzeigedisplay direkt entsprechende Leiterbahnen auf der Trägerscheibe.

Bei einem bevorzugten Ausführungsbeispiel ist vorgesehen, daß ein Bildübertragungssignal durch die mindestens eine elektrisch leitende Schicht der Trägermaterialscheibe an den Rand der Trägermaterialscheibe übertragbar sind.

Bei einem weiteren Ausführungsbeispiel ist vorgesehen, daß ein Schallwandler kabellos auf der Trägerscheibe kontaktiert ist. Dieser Schallwandler kann sowohl auf der Unterseite als auch auf der Oberseite der Trägerscheibe angeordnet sein.

Bei einem bevorzugten Ausführungsbeispiel ist die Trägermaterialscheibe größer als die flexible Dünnglasscheibe, so daß elektrische Funktionselemente auf dem überstehenden Rand der Trägermaterialscheibe direkt mit den Leiterbahnen der Trägermaterialscheibe kontaktiert werden können.

Vorzugsweise ist vorgesehen, daß die Abstandhalter für die flexible Dünnglasscheibe ausschließlich im Randbereich der Dünnglasscheibe angeordnet sind, und daß das Glasbedienungsfeld ohne weitere Abstandhalter an beliebiger Stelle punktuell schaltbar ist. Demzufolge hat die Dünnglasscheibe außer in ihrem Randbereich keine weiteren Abstandhalter.

Die Sendeeinrichtung überträgt kodierte Signale mehrkanalig an die mindestens eine Empfangseinrichtung. Die Fernbedienungsvorrichtung ermöglicht die mehrkanalige kodierte Signalübertragung, so daß unterschiedliche Empfangseinrichtungen selektiv ansteuerbar sind.

Die Signalübertragung zwischen Sendeeinrichtung und der Empfangseinrichtung kann durch Funk oder durch Infrarot-Sendeübertragung erfolgen. Beispielsweise kann eine Infrarot-Signalübertragungseinrichtung mit 64 Kanälen verwendet werden.

Mit Hilfe einer Schalteinrichtung kann z.B. eine Beleuchtungsanlage gesteuert werden. Dabei kann die Empfangseinrichtung beispielsweise in einer Deckendose für eine Lampe angeordnet sein. Die Fernbedienungsvorrichtung kann eine eigene Empfangseinrichtung für drahtlos übertragene Audio- und/oder Videosignale aufweisen. Mit dieser Empfangseinrichtung ist es beispielsweise möglich, Bild- und Tonsignale an die Fernbedienungsvorrichtung drahtlos zu übertragen, die mit Hilfe des LCD-Anzeigedisplays und/oder dem Schallwandler wiedergegeben werden können. Die Empfangseinrichtung kann beispielsweise Audio- und/oder Videosignale einer Hausüberwachungsanlage erhalten.

Im folgenden werden unter Bezugnahme auf die Zeichnungen Ausführungsbeispiele der Erfindung näher erläutert:

Es zeigen:
- Fig. 1: einen Querschnitt durch eine erfindungsgemäße Fernbedienungsvorrichtung,
- Fig. 2: eine Draufsicht auf die Fernbedienungsvorrichtung gemäß Fig. 1,
- Fig. 3: einen Querschnitt durch ein zweites Ausführungsbeispiel der Fernbedienungsvorrichtung,
- Fig. 4: eine Draufsicht auf das Ausführungsbeispiel der Fig. 3,
- Fig. 5: ein drittes Ausführungsbeispiel, und
- Fig. 6: ein viertes Ausführungsbeispiel.

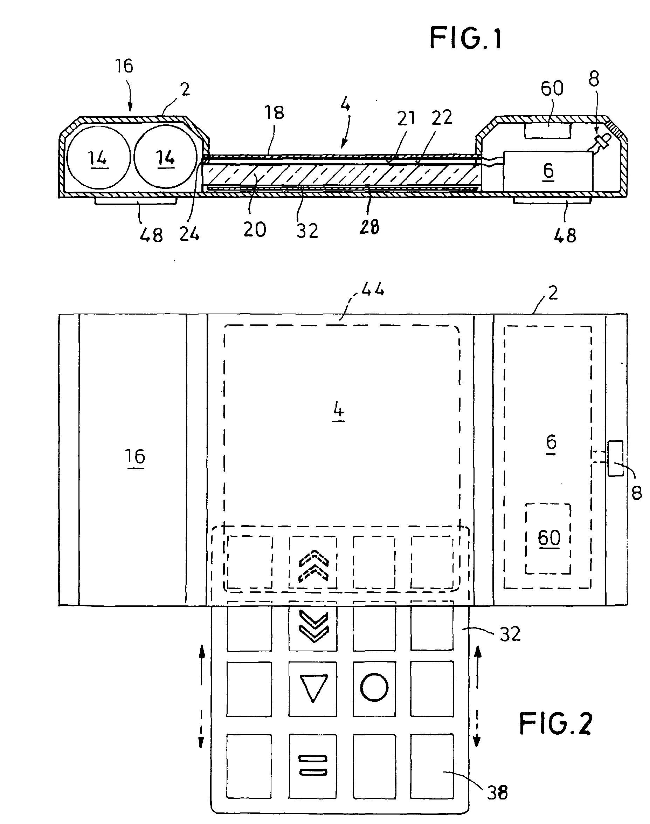

Die in Fig. 1 im Querschnitt dargestellte Fernbedienungvorrichtung weist ein Gehäuse 2 auf, in dem ein Bedienfeld 4 für unterschiedliche Fernbedienungsbefehle angeordnet ist, und das eine Sendeeinrichtung 8 mit einer zugehörigen elektrischen Schaltung 6 aufnimmt. Die Sendeeinrichtung 8 arbeitet mit einer Empfangseinrichtung in einer elektrischen Schalteinrichtung oder in einem elektrischen Gerät zusammen, um die Fernbedienungsbefehle drahtlos zu übertragen. Das Gehäuse nimmt ferner ein Batteriefach 16 für die Stromversorgung auf, in dem beispielsweise zwei Batterien oder Akkumulatoren 14 angeordnet sind.

Das Bedienfeld besteht aus einem freiprogrammierbaren Glasbedienfeld 4, das bei Druckbelastung mittels eines Fingers ein Schaltsignal an die Sendeeinrichtung 8 über die elektrische Schaltung 6 überträgt. Das Glasbedienfeld 4 besteht aus einer flexiblen Dünnglasscheibe 18, die an ihrem umlaufenden Randbereich einen Abstandhalter 24 aufweist. Aufgrund des Abstandhalters 24 wird ein vorbestimmter Abstand zu einer unterhalb der Dünnglasscheibe 18 angeordneten Trägermaterialscheibe 20 eingehalten. Die einander zugewandten Oberflächen der Dünnglasscheibe 18 und der Trägermaterialscheibe 20 weisen jeweils eine elektrisch leitende Schicht 21,22 auf. Die sich gegenüberliegenden Schichten 21,22 berühren sich bei Druckbelastung der flexiblen Dünnglasscheibe 18 punktuell und können auf diese Weise ein Fernbedienungssignal auslösen. Die elektrisch leitende Schicht 21,22 kann vollflächig auf der Dünnglasscheibe 18 und der Trägermaterialscheibe 20 aufgebracht sein oder aus parallel zueinander angeordneten Leiterbahnen bestehen, wobei die Leiterbahnen der Dünnglasscheibe 18 orthogonal zu den Leiterbahnen der Trägermaterialscheibe 20 verlaufen.

Unterhalb der relativ zur Dünnglasscheibe 18 dickeren Trägermaterialscheibe 20 ist in dem Gehäuse 2 ein Aufnahmeschlitz 28 für eine auswechselbare Tafel 32, die, wie aus Fig. 2 ersichtlich, auf ihrer Oberseite Kennzeichnungen 38 für die Funktionsfelder 36 des Glasbedienfeldes 4 aufweist. Auf diese Weise ist es möglich, bei Änderung der Programmierung des Glasbedienfeldes 4 durch Auswechseln der Tafel 32 die geänderten Funktionen der Funktionsfelder 36 anzuzeigen.

Beispielsweise ist es möglich, die auswechselbare Tafel 32 beidseitig zu bedrucken oder mehrere auswechselbare Tafeln 32 vorzusehen.

Alternativ zu der auswechselbaren Tafel kann unterhalb der Trägermaterialscheibe 20 ein LCD-Anzeigedisplay 40 angeordnet sein, mit dessen Hilfe ebenfalls unterschiedliche Funktionen der Funktionsfelder 36 auf dem Glasbedienfeld 4 durch Schriftzeichen oder Symbole angezeigt werden können. Zusätzlich oder alternativ können auch Informationen auf dem LCD-Anzeigedisplay 40 angezeigt werden.

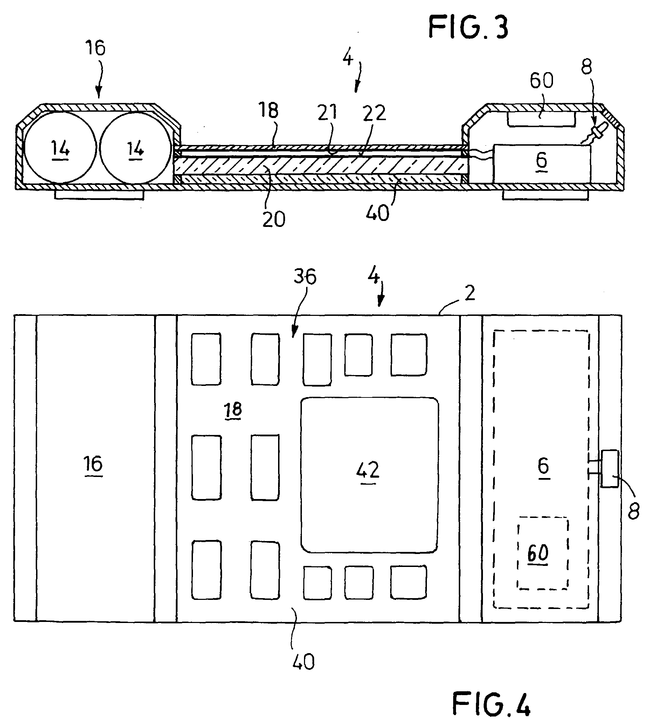

Fig. 4 zeigt eine Anordnung von Funktionsfeldern 36 auf dem Glasbedienfeld 4, sowie ein Bild-Displayfeld 42, auf dem Bildinformationen angezeigt werden können.

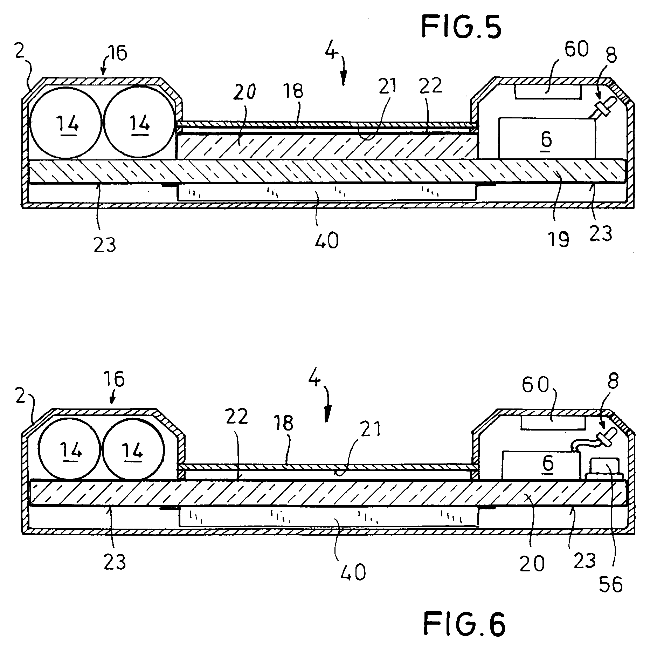

Bei einer bevorzugten Weiterbildung der Erfindung ist vorgesehen, daß die Trägermaterialscheibe 20 beidseitig eine elektrisch leitende Schicht 22,23 aufweist. Fig. 6 zeigt eine derartige Trägermaterialscheibe mit einer oberen elektrisch leitenden Schicht 22 und einer unteren elektrisch leitenden Schicht 23. Die Dünnglasscheibe 18 weist wie bei allen Ausführungsbeispielen an ihrer Unterseite eine elektrisch leitende Schicht 21 auf.

Auf der unteren elektrisch leitenden Schicht 23 kann, wie aus den Ausführungsbeispielen der Fig. 5 und 6 ersichtlich ist, das LCD-Anzeigedisplay 40 direkt und kabellos mit der elektrisch leitenden Schicht 23 kontaktiert werden. Bei beiden Ausführungsbeispielen ist die Trägermaterialscheibe 19 bzw. 20 größer als die Dünnglasscheibe 18, wobei insbesondere bei dem Ausführungsbeispiel der Fig. 6 auch die vergrößerte Trägermaterialscheibe 20 elektrische oder elektronische Bauelemente aufnehmen kann, die mit ihr direkt kontaktiert sind. So kann bei dem Ausführungsbeispiel der Fig. 6 die Stromversorgung über die Batterien 14 direkt mit der elektrisch leitenden Schicht 22 kontaktiert werden. Desweiteren kann die elektrische oder elektronische Schaltung 6, die auch einen Mikroprozessor enthalten kann, ebenfalls direkt mit der elektrisch leitenden Schicht 22 der Trägermaterialscheibe 20 kontaktiert sein.

Beispielsweise ist es möglich, ein Bildübertragungssignal durch die mindestens eine elektrisch leitende Schicht der Trägermaterialscheibe von dem Rand der Trägermaterialscheibe an das Bild-Displayfeld 42 zu übertragen. Die Video-/Audiosignalübertragung an die Fernbedienung kann über eine drahtlose Bild- und Tonübertragungseinrichtung 60, beispielsweise per Funk, erfolgen.

Wie auf dem Ausführungsbeispiels der Fig. 6 dargestellt, kann auf der Trägermaterialscheibe 20 ein Schallwandler 56 angeschlossen sein. Dieser Schallwandler 56 ist vorzugsweise direkt mit der elektrisch leitenden Schicht 22 kontaktiert und ermöglicht die Wiedergabe von Audiosignalen.

Das Ausführungsbeispiel der Fig. 5 zeigt eine Trägermaterialscheibe 19,20, die zweiteilig ausgeführt ist, wobei die obere Trägermaterialscheibe 20 hinsichtlich der Maße der Dünnglasscheibe 18 des Glasbedienfeldes 4 angepaßt ist, während die untere Trägermaterialscheibe 19, die mit der oberen Trägermaterialscheibe 20 verklebt ist, gegenüber der Trägermaterialscheibe 20 übersteht und elektronische Bauelemente aufnehmen kann. Bei diesem Ausführungsbeispiel weist die obere Trägermaterialscheibe 20 eine der Dünnglasscheibe 18 zugewandte obere elektrisch leitende Schicht 22 auf und die untere Trägermaterialscheibe 19 eine dem LCD-Anzeigedisplay 40 zugewandte untere elektrisch leitende Schicht 23 auf.

Die Trägermaterialscheibe 20 aller Ausführungsbeispiele kann auf der der Dünnglasscheibe 18 abgewandten Seite eine lichtstreuende aufgerauhte Oberfläche aufweisen.

Alternativ kann die Trägermaterialscheibe 20 auf der der Dünnglasscheibe 18 abgewandten Seite eine Lichtleitfolie mit einer Prismenoberfläche aufweisen. Mit hilfe der lichtstreuenden aufgehauhten Oberfläche bzw. mit Hilfe der Lichtleitfolie kann eine Beleuchtung des Bedienfeldes 4 erfolgen.

Die Dünnglasscheibe 18 kann auf der Unterseite einen Dekorrand 44, wie in Fig. 3 dargestellt, aufweisen. Die flexible Dünnglasscheibe 18 besteht aus einer gezogenen oder gefloateten Dünnglasfolie. Die Dicke der Dünnglasscheibe 18 liegt vorzugsweise im Bereich zwischen 0,1 und 0,3 mm.

Das Gehäuse 2 kann Befestigungsmittel 48 auf der Unterseite des Gehäuses aufweisen, um die Fernbedienungsvorrichtung auf Flächen, z.B. Wandflächen, lösbar zu befestigen. Auf diesen Flächen sind dann zweite Befestigungsmittel angeordnet, die mit den ersten Befestigungsmitteln 48 zusammenwirken. Beispielsweise bestehen die Befestigungsmittel aus Klettverschlüssen.

Die Sendeeinrichtung 8 kann kodierte Signale mehrkanalig an eine Empfangseinrichtung übertragen. Die Signalübertragung kann über Funk oder durch Infrarot-Signalübertragung erfolgen. Die mit der Fernbedienung zusammenwirkende Schalteinrichtung kann beispielsweise eine Beleuchtungsanlage steuern. Hierbei kann die Empfangseinrichtung für die Sendeeinrichtung 8 in einer Deckendose einer Lampe angeordnet sein.

Die Fernbedienung ist für alle bekannten Fernbedienungsanwendungen verwendbar, wie beispielsweise für Video- und Audiogeräte, für Alarmanlagen, für Tür- und Toröffnungsanlagen und für Lichtsteuerungsanalgen.

## Patentansprüche

1. Fernbedienungsvorrichtung für mindestens eine elektrische Schalteinrichtung oder mindestens ein elektrisches Gerät mit einem Gehäuse (2), mit einem Bedienfeld (4) für unterschiedliche Fernbedienungsbefehle, mit mindestens einer Sendeeinrichtung (8) in dem Gehäuse (2) und mindestens einer Empfangseinrichtung in jeder Schalteinrichtung oder in jedem Gerät zur drahtlosen Übertragung der Fernbedienungsbefehle, sowie mit einem Batteriefach (16) für die Stromversorgung,
**dadurch gekennzeichnet**,
daß das Bedienfeld aus einem frei programmierbaren Glasbedienfeld (4) besteht, das bei Druckbelastung ein Schaltsignal an die Sendeeinrichtung (8) überträgt.

2. Fernbedienungsvorrichtung nach Anspruch 1, dadurch gekennzeichnet, daß das Glasbedienfeld (4) aus einer flexiblen Dünnglasscheibe (18) und mindestens einer Trägermaterialscheibe (20) besteht, deren einander zugewandte Flächen jeweils eine elektrisch leitende Schicht aufweisen, wobei die sich gegenüberstehenden Scheiben (18,20) mit Hilfe von Abstandhaltern (24) auf Abstand gehalten sind, und daß sich die elektrisch leitenden Schichten bei Druckbelastung der flexiblen Dünnglasscheibe (18) an einer im wesentlichen punktuellen Druckbelastungsstelle berühren.

3. Fernbedienungsvorrichtung nach Anspruch 1 oder 2, dadurch gekennzeichnet, daß das Gehäuse (2) auf der der Dünnglasscheibe (18) abgewandten Seite der Trägermaterialscheibe (20) einen Aufnahmeschlitz (28) für eine auswechselbare Tafel (32) zur Kennzeichnung der Funktionsfelder (36) auf dem Glasbedienfeld (4) aufweist.

4. Fernbedienungsvorrichtung nach einem der Ansprüche 1 oder 2, dadurch gekennzeichnet, daß auf der der Dünnglasscheibe (18) abgewandten Seite der Trägermaterialscheibe (18) ein LCD-Anzeigedisplay (40) zur Kennzeichnung von Funktionsfeldern (36) auf dem Glasbedienfeld (4) und/oder zur Anzeige von Informationen angeordnet ist.

5. Fernbedienungsvorrichtung nach Anspruch 4, dadurch gekennzeichnet, daß die Trägermaterialscheibe (20) beidseitig eine elektrisch leitende Schicht (22,239 aufweist.

6. Fernbedienungsvorrichtung nach Anspruch 5, dadurch gekennzeichnet, daß das LCD-Anzeigedisplay (40) in direktem Kontakt mit der Trägerscheibe (20) kabellos angeschlossen ist.

7. Fernbedienungsvorrichtung nach Anspruch 6, dadurch gekennzeichnet, daß ein Bildübertragungssignal durch die mindestens eine elektrisch leitende Schicht (22,23) der Trägermaterialscheibe (20) an den Rand der Trägermaterialscheibe (20) übertragbar sind.

8. Fernbedienungsvorrichtung nach Anspruch 5 oder 6, dadurch gekennzeichnet, daß auf der Trägermaterialscheibe (20) ein Schallwandler (56) angeschlossen ist.

9. Fernbedienungsvorrichtung nach einem der Ansprüche 1 bis 8, dadurch gekennzeichnet, daß die Trägermaterialscheibe (20) auf der der Dünnglasscheibe (18) abgewandten Seite eine lichtstreuende aufgerauhte Oberfläche aufweist.

10. Fernbedienungsvorrichtung nach einem der Ansprüche 1 bis 9, dadurch gekennzeichnet, daß die Trägermaterialscheibe (20) auf der der Dünnglasscheibe (18) abgewandten Seite eine Lichtleitfolie mit einer Prismenoberfläche aufweist.

11. Fernbedienungsvorrichtung nach einem der Ansprüche 2 bis 10, dadurch gekennzeichnet, daß die flexible Dünnglasscheibe (18) aus einer gezogenen oder gefloateten Dünnglasfolie besteht.

12. Fernbedienungsvorrichtung nach einem der Ansprüche 5 bis 11, dadurch gekennzeichnet, daß die Trägermaterialscheibe (20) größer ist als die flexible Dünnglasscheibe (18) ist.

13. Fernbedienungsvorrichtung nach einem der Ansprüche 2 bis 12, dadurch gekennzeichnet, daß die Abstandhalter (24) ausschließlich im Randbereich der Dünnglasscheibe (18) angeordnet sind, und daß das Glasbedienfeld (4) ohne weitere Abstandhalter an beliebiger Stelle punktuell schaltbar ist.

14. Fernbedienungsvorrichtung nach einem der Ansprüche 1 bis 13, dadurch gekennzeichnet, daß das Gehäuse (2) erste Befestigungsmittel (48) zur Befestigung des Gehäuses auf Flächen, z.B. Wandflächen aufweist, die mit auf den Flächen angeordneten zweiten Befestigungsmitteln zusammenwirken.

15. Fernbedienungsvorrichtung nach einem der Ansprüche 1 bis 14, dadurch gekennzeichnet, daß die Sendeeinrichtung (8) kodierte Signale mehrkanalig an die mindestens eine Empfangseinrichtung überträgt.

16. Fernbedienungsvorrichtung nach einem der Ansprüche 1 bis 15, dadurch gekennzeichnet, daß die mindestens eine Schalteinrichtung eine Beleuchtungsanlage steuert.

17. Fernbedienungsvorrichtung nach Anspruch 16, dadurch gekennzeichnet, daß die Empfangseinrichtung in einer Deckendose für eine Lampe angeordnet ist.

18. Fernbedienungsvorrichtung nach einem der Ansprüche 6 bis 17, dadurch gekennzeichnet, daß das Gehäuse (2) eine Empfangseinrichtung (60) für drahtlos übertragene Audio- und/oder Videosignale aufweist.
